# EUROPÄISCHE PATENTSCHRIFT

(11) **EP 3 224 496 B1**
(45) Veröffentlichungstag und Bekanntmachung des Hinweises auf die Patenterteilung: **26.09.2018**
(21) Anmeldenummer: 15790842.7
(22) Anmeldetag: 06.11.2015
(51) Int. Cl.: F16D 65/18, F16D 65/56

(54) **SCHEIBENBREMSE, INSBESONDERE FÜR NUTZFAHRZEUGE**
DISC BRAKE, IN PARTICULAR FOR COMMERCIAL VEHICLES
FREIN À DISQUE, NOTAMMENT POUR VÉHICULES UTILITAIRES

(30) Priorität: 25.11.2014 DE 102014019438
(43) Veröffentlichungstag der Anmeldung: 04.10.2017
(73) Patentinhaber: WABCO Europe BVBA, 1170 Brüssel (BE)
(72) Erfinder: HENNING, Paul, 68723 Schwetzingen (DE); JUNGMANN, Hans-Christian, 69517 Gorxheimertal (DE); KELLER, Marcus, 69469Weinheim (DE); MACUTKIEWICZ, Piotr, 58-100 Swidnica (PL); REDEMANN, Bernward, 68766 Hockenheim (DE); STINGL, Gunther, 64367 Mühltal (DE)
(74) Vertreter: Lauerwald, Jörg
(86) Internationale Anmeldenummer: PCT/EP2015/002234
(87) Internationale Veröffentlichungsnummer: WO 2016/082913

(56) Entgegenhaltungen:
- DE-A1- 4 034 165
- DE-A1- 4 307 018
- DE-A1- 10 260 597
- US-B1- 7 152 722

## Beschreibung

Die Erfindung betrifft eine Scheibenbremse, insbesondere für Nutzfahrzeuge, mit einer Bremsscheibe, einem Bremssattel, mindestens einer auf einer Seite der Bremsscheibe innerhalb des Bremssattels liegenden Zuspanneinrichtung, einer axial verschieblichen Einrichtung, die bei Betätigung der Bremse einen Bremsbelag mittels mindestens einer Stellspindel axial in Richtung der Bremsscheibe verschiebt, wobei die Stellspindel drehbar ist, ein Außengewinde aufweist und in eine Gewindebohrung in der verschieblichen Einrichtung eingeschraubt ist, und mit einem Nachstellgetriebe, das um eine parallel zur Drehachse der Bremsscheibe liegende Achse verdrehbar ist und bei Verdrehen in einer ein Nachstellen bewirkenden ersten Drehrichtung wegen einer in dieser Drehrichtung wirkenden Drehkopplung die Stellspindel verdreht.

Derartige Scheibenbremsen sind in der Regel pneumatisch oder elektromechanisch betätigbar.

Generell sind Verschleißnachstellvorrichtungen in unterschiedlichen Ausführungen bekannt, beispielsweise mechanische Nachstellungen, wie sie heute in gängigen Nutzfahrzeugscheibenbremsen für ein in bestimmten Grenzen konstantes Lüftspiel sorgen. Da die Nachstellungen unter allen Fahr- und Bremssituationen ein konstantes Lüftspiel aufrechterhalten müssen, sind die Anforderungen an die Präzision derartiger Nachstellungen sehr hoch. Es bestimmt nämlich insbesondere das Lüftspiel, das bis zur Belaganlage überwunden werden muß, den Schwenkweg beispielsweise eines zur Zuspannung dienenden Drehhebels und somit die maximal aufzubringende Bremskraft bzw. die Bremskraftreserve.

Bei solchen mit einer Nachstellvorrichtung ausgerüsteten Scheibenbremsen wird bei Bremsbetätigung und einem gegenüber einem Sollwert veränderten Lüftspiel die Nachstellvorrichtung aktiviert, beispielsweise durch ein Zustellelement einer Zuspanneinrichtung der Scheibenbremse. Tritt also ein Verschleiß von Bremsbelägen und/oder der Bremsscheibe mit einer daraus resultierenden Veränderung (Vergrößerung) des Lüftspiels auf, so erfolgt ein selbsttätiges Nachstellen der Beläge mittels der Nachstellvorrichtung, beispielsweise durch eine Verstellbewegung von Druckstempeln. Ein konstruktiv vorgegebenes Lüftspiel ist in Form fester geometrischer Größen in den am Nachstellvorgang beteiligten Bauelementen abgebildet.

Aus der DE 195 07 308 A1 und der DE 10 2008 037 775 B3 sind Scheibenbremsen bekannt, die eine drehhebelbetätigte Zuspanneinrichtung aufweisen. Zur Zuspann-einrichtung selbst gehört in diesen Fällen ein Drehhebel mit einer exzentrisch wirkenden Bremswelle, deren Dreh- oder Gleitachse parallel zur Bremsscheibenebene liegt und die auf ein im Bremssattel verschiebbares Druckstück einwirkt. Anstelle von "Druckstück" ist bisweilen auch von einer Traverse oder einer Brücke die Rede. Der Einfachheit halber wird daher im Folgenden nur noch von einem "verschiebbaren Element" gesprochen. Das verschiebbare Element selbst ist drehfest im Bremssattel angeordnet. In dem verschiebbaren Element ist mittig eine Druckspindeleinrichtung gelagert, die eine drehbare und mit einem Druckbund versehende Nachstellmutter und eine darin eingeschraubte, aber drehfest gehaltene Druckspindel bzw. Stellspindel aufweist. Über diese Teile wird die Zuspannkraft auf wenigstens einen Bremsbelag übertragen, der dann gegen die Bremsscheibe gepreßt wird.

Bei den oben genannten bekannten Scheibenbremsen ist die Nachstellvorrichtung am bremsscheibenabgewandten Endbereich der drehbar und mit einem Druckbund versehenen Nachstellmutter ortsfest gehalten. Da die Nachstellmutter selbst ebenfalls ortsfest in dem verschiebbaren Element gelagert ist, folgt die Nachstellvorrichtung den Axialbewegungen des verschiebbaren Elements bei Zuspannbewegungen.

Der Begriff "ortsfest" bezieht sich auf die Position der Nachstellvorrichtung sowohl bei unbetätigter Bremse, als auch bei betätigter Bremse und während der Nachstellung selbst.

Die zur Nachstellung gehörenden Teile sind funktionsmäßig in einen Antriebs- und einen Abtriebsbereich zu unterteilen, wobei der Antriebsbereich mit dem Drehhebel zur Drehmitnahme gekoppelt ist. Über eine als Einwegkupplung wirkende Schlingfeder wird die Drehbewegung auf den Abtriebsbereich übertragen, der über eine federbelastete und somit last- bzw. drehmomentabhängig wirkende mechanische Trennkupplung/Trenneinrichtung die Verdrehung der Nachstellmutter bewirkt. Bei der Trennkupplung/Trenneinrichtung handelt es sich beispielsweise um einen Reibkonus. Da die in die drehbare Nachstellmutter eingeschraubte Druck- bzw. Stellspindel verdrehfest gehalten ist, wird sie in Richtung der Bremsscheibe herausgeschraubt. Der Nachstellschritt wird beendet, wenn aufgrund des Krafthubes die Reibung in der Nachstellmutterlagerung bzw. Gewindepaarung ansteigt und das maximal mögliche Nachstellmoment übersteigt. Die drehmomentabhängige Kupplung rutscht dann durch, wodurch elastische Bremsenverformungen während des Krafthubes nicht in den Nachstellweg einfließen können.

Bei den oben beschriebenen bekannten Bremsen liegen die zur Nachstellung gehörenden Teile in Axialrichtung gesehen hintereinander und sind ortsfest mit dem verschiebbaren Element verbunden. Dies erfordert eine entsprechende Einbaulänge in Axialrichtung. Da weiterhin die Zuspannteile, also die Nachstellmutter und die Druckspindel, entsprechenden Bauraum in Anspruch nehmen, ist eine Vergrößerung der Teile zur Erzielung von höheren Zuspannkräften bedingt durch die vorgegebene Sattelkontur nicht möglich. Zudem können in allen Nachstellvorrichtungen die die federbelastete mechanische Trenneinrichtung bildenden Nachstellsteile einem relativen Verschleiß in den Kontaktbereichen unterliegen, was die Nachstellgenauigkeit beeinflußt.

Aus der DE 40 34 165 A1 ist eine Scheibenbremse mit einem als Traverse bezeichneten verschiebbaren Element bekannt. Das verschiebbare Element ist mit einer Gewindebohrung versehen, in die eine Stellspindel eingeschraubt ist, welche in Wirkverbindung mit einer Nachstellvorrichtung (Drehantrieb) zur Lüftspieleinstellung steht.

Bei dieser bekannten-Bremse ist die Gesamtheit der als Drehantrieb dienenden Nachstellvorrichtung in Axialrichtung länglich bzw. röhrenförmig als zusammenhängende Baugruppe ausgeführt. Diese wird durch eine der Bremsscheibe abgewandte Sattelöffnung ins Sattelinnere verbracht und dort ortsfest am Sattelende befestigt, so daß sie sich in eine Öffnung der Stellspindel hinein erstreckt. Der Drehantrieb liegt daher konzentrisch innerhalb der hohlen Drehspindel. Dabei ist der Drehantrieb bzw. dessen Abtriebsteil undrehbar, aber axial verschiebbar mit der Stellspindel über axiale Profilierungen gekoppelt. Damit werden die Drehbewegungen des Nachstellers auf die Stellspindel übertragen. Mit zunehmender Verschleißnachstellung wird die Stellspindel in Richtung des Bremsbelages bzw. der Bremsscheibe aus dem verschiebbaren Element herausgeschraubt und somit auch gegenüber der ortsfesten Nachstellung axial verschoben. Als momentenabhängige Trenneinrichtung dienen innerhalb der Nachstellerbaugruppe Reibkupplungen oder Zahngesperre, die jeweils federbelastet sind und mechanisch wirken.

Da bei der Bremse nach der DE 40 34 165 A1 die Nachstellung ortsfest am Bremssattel befestigt ist und das als Traverse bezeichnete verschiebbare Element mit der Stellspindel bei jeder Betätigung verschoben wird, finden in den Kontaktbereichen zwischen der Nachstellung bzw. deren Abtriebsteil und der Stellspindel gegenläufige Relativverschiebungen statt, die zudem während eines Nachstellschrittes noch von Drehbewegungen überlagert werden. Da hier die Zuspannung einerseits und die Nachstelleinrichtung andererseits getrennte Baugruppen sind, erfordert dies entsprechenden Montageaufwand. Weiterhin können die gegensätzlichen Relativbewegungen die Genauigkeit der Nachstellung beeinflussen.

Zu der Bremse nach dem DE-GM 92 06 052 gehört eine Zuspanneinrichtung mit Drehhebel und eine Druckspindeleinrichtung, die nicht in einem zusätzlichen verschiebbaren Element, sondern unmittelbar im Bremssattel gelagert ist. Die Nachstellvorrichtung ist wiederum ortsfest am Bremssattel gehalten und liegt als separate Baugruppe in einer parallelen Achse zur Drehachse der Druckspindeleinrichtung. Die Drehbewegungen werden von der Nachstellung über ein Zahnradgetriebe auf die Druckspindeleinrichtung übertragen.

Eine ähnliche Scheibenbremse wie das DE-GM 92 06 052 zeigt die EP 1 852 627 A2. Sie ist zwar als Einspindelbremse ausgelegt. Wiederum ist aber ein Achsversatz zwischen der Nachstellung und der Druckspindeleinrichtung mit dazwischen liegendem Zahngetriebe vorgesehen.

Sowohl die Bremse nach dem DE-GM 92 06 052 als auch diejenige nach der EP 1 852 627 A2 sind mit mechanisch wirkenden Trenneinrichtungen (Reibkupplung) versehen, die federkraftgesteuert sind und eine übermäßige Nachstellung im Krafthub verhindern sollen.

Die Scheibenbremse nach der DE 10 2005 003 223 A1 ist eine Doppelspindelbremse mit ähnlichem Grundaufbau wie die eingangs genannten Bremsen nach der DE 195 07 308 A1 und der DE 10 2008 037 775 B3. Wiederum ist nämlich eine eine Nachstellmutter und eine Stellspindel aufweisende Druckspindeleinrichtung in einem verschiebbaren Element gelagert. Die Nachstellvorrichtung ist einerseits am verschiebbaren Element und andererseits - wie z.B. auch nach der DE 40 34 165 A1 - am Bremssattelende ortsfest angebracht. Da auch hier gegenläufige Relativbewegungen - und diese sogar innerhalb der Nachstellvorrichtung - stattfinden, sind der erste und der zweite Bereich der Nachstellung mittels axialer Verbindungskupplung (Klauenkupplung) gekoppelt. Auch diese Nachstellvorrichtung weist eine mechanisch wirkende Trenneinrichtung (Rutschkupplung) zur Vermeidung von übermäßigen Nachstellungen auf.

Die DE 20 2006 021 050 U1 zeigt eine ortsfest am Bremssattel gehaltene und zwischen zwei Druckstempeln gelagerte Nachstellvorrichtung, die im Kraftfluß der Zuspannung liegt, und eine last- bzw. drehmomentabhängig wirkende mechanische Trenneinrichtung in Form einer axial wirkenden Kugelkupplung zur Vermeidung übermäßigen Nachstellens.

Die DE 43 07 018 A1 zeigteine Scheibenbremse mit einer in jedem Betriebszustand ortsfest am Bremssattel gehaltenen Nachstellvorrichtung, deren Abtriebsteil sich in die Stellspindel längserstreckt. Sie ist mittels Profilscheibe drehfest, aber axial verschiebbar mit der Stellspindel in Wirkverbindung bzw. damit gekoppelt. Als Drehantrieb für die Nachstellung über eine Einwegkupplung dient ein unmittelbar mit dem Drehhebel gekoppelter Federschenkel einer Drehfeder, wobei die Drehfeder als Überlastschutz sowie als Energiespeicher wirkt, um gegebenenfalls auch im Bremslösehub den sich während des Bremsvorgangs einstellenden Belagverschleiß nachzustellen. Neben den nachteiligen gegenläufigen Relativbewegungen während des Zuspann- und Nachstellvorganges in den Kontaktbereichen zwischen der Zuspannung und der Nachstellung selbst sind insbesondere die Ausführung und die Lagerung der Nachstellung sowohl bezüglich des Drehhebels und des Bremssattels als auch die Lagerung bezüglich der Nachstellteile untereinander durch Reibungseinflüsse störanfällig. Die Nachstellgenauigkeit könnte somit beeinträchtigt werden. Da weiterhin die Teile der Zuspannung und der Nachstellung im Bremssattel - axial gesehen - hintereinander liegen, ergeben sich Sattelbaulängen, die den Anforderungen an die engen Einbauverhältnisse im Nutzfahrzeug nicht gerecht werden. Zudem erfüllt der Montageaufwand nicht alle Anforderungen nach Automatisierung.

Die Erfindung geht aus von der aus der DE 40 34 165 A1 bekannten Scheibenbremse. Es liegt ihr die Aufgabe zugrunde, die bekannte Bremse derart zu verbessern, daß die oben beschriebenen Nachteile hinsichtlich Aufbau, Lagerung, Nachstellgenauigkeit und Einsatzflexibilität vermieden sind.

Erfindungsgemäß wird die gestellte Aufgabe bei einer Scheibenbremse der eingangs genannten Art dadurch gelöst, daß das Nachstellgetriebe eine Gewindeeinrichtung aufweist, die zumindest bei einem Verdrehen in einer der ersten Drehrichtung entgegengesetzten zweiten Drehrichtung mit dem Außengewinde der Stellspindel kämmt und das Nachstellgetriebe bezüglich der Stellspindel verschraubt.

Mit anderen Worten wird das Nachstellgetriebe nicht wie bei den bekannten Bremsen ortsfest am Bremssattel oder ortsfest an dem verschiebbaren Element gehalten. Vielmehr erfolgt die Halterung/Lagerung direkt am/auf dem Gewindebereich der Stellspindel. Die Wirkverbindung wird unmittelbar über das Außengewinde der Stellspindel hergestellt. Bei den bekannten Scheibenbremsen erforderliche Befestigungen/Halterungen des Nachstellgetriebes an dem verschiebbaren Element oder an dem Bremssattel können mithin entfallen. Die Stellspindel selbst trägt das Nachstellgetriebe.

Wie bereits oben erwähnt ist erfindungsgemäß das Nachstellgetriebe unmittelbar auf der Stellspindel gehalten. Daher kann die Nachstellmutter entfallen. Dadurch wird die Bremse erheblich vereinfacht.

Erfindungsgemäß bevorzugt ist die Gewindeeinrichtung eine Schlingfeder, die die gleiche Steigung wie das Außengewinde der Stellspindel hat. Diese Schlingfeder kann mithin zwei Funktionen gleichzeitig erfüllen. Zum einen dient sie dazu, das Nachstellgetriebe mit der Stellspindel verschraubbar zu machen, zumindest was die zweite Drehrichtung angeht. Zum anderen stellt sie eine Einwegkupplung dar, die sicherstellt, daß das Nachstellgetriebe bei einem Verdrehen in der ersten Drehrichtung mit der Stellspindel drehgekoppelt ist und daher die Stellspindel verdreht.

Erfindungsgemäß weiter bevorzugt ist vorgesehen, daß zwei oder mehr Windungen der Schlingfeder mit dem Außengewinde der Stellspindel kämmen. Dadurch ist eine verläßliche Kopplung gegeben.

Nach einer weiter bevorzugten Ausführungsform der Erfindung ist vorgesehen, daß ein Endabschnitt der Schlingfeder an einer Führungshülse des Nachstellgetriebes gehalten ist, vorzugsweise durch Formschluß. Dadurch ist eine besonders einfache Form der Kopplung der Schlingfeder mit der Führungshülse geschaffen.

Die Führungshülse kann mindestens eine Gewindeeinrichtung aufweisen, die mit dem Außengewinde der Stellspindel kämmt. Mit anderen Worten kämmt nach dieser Ausführungsform nicht nur die Stellspindel (in der zweiten Drehrichtung) mit dem Außengewinde der Stellspindel, sondern auch die Führungshülse. Dadurch ist die Führungshülse noch sicherer auf der Stellspindel gehalten, ohne daß man sich auf die Schlingfeder allein verlassen müßte.

Die Schlingfeder liegt erfindungsgemäß weiter bevorzugt radial außen in einer Wendelnut. Dadurch ist sichergestellt, daß die Schlingfeder, die einerseits axial mit der Stellspindel gekoppelt ist, andererseits auch axial mit den übrigen Teilen des Nachstellgetriebes gekoppelt ist, wodurch eine insgesamt verläßliche Axialkopplung des gesamten Nachstellgetriebes mit der Stellspindel sichergestellt ist.

Erfindungsgemäß weiter bevorzugt ist vorgesehen, daß das Nachstellgetriebe um mindestens eine Strecke axial verschieblich ist, die der maximalen Nachstellstrecke pro Nachstellschritt entspricht. Diese Ausgestaltung stellt sicher, daß das Nachstellgetriebe in keinem denkbaren Betriebszustand infolge von Axialverschiebungen irgendwo anschlägt.

Erfindungsgemäß weiter bevorzugt kann eine einem Verdrehen der Stellspindel entgegenwirkende Bremseinrichtung vorgesehen sein. Eine solche Bremseinrichtung dient zum einen dem Festhalten der Stellspindel während der Verschraubbewegungen des Nachstellgetriebes in der zweiten Drehrichtung. Zum anderen dient die Bremseinrichtung der Vermeidung von (ungewollten) Verstellungen infolge von Vibrationen und Rütteln auf Schlechtwegstrecken.

Das Nachstellgetriebe weist erfindungsgemäß weiter bevorzugt wenigstens eine Nut auf, deren Weite einem Solllüftspiel entspricht. Bei Scheibenbremsen, die mittels eines Drehhebels zugespannt werden, nimmt die Nut einen Mitnahmestift auf, der zum Verdrehen des Nachstellgetriebes beim Bremsen dient. Das Spiel des Mitnahmestiftes in der Nut bestimmt dabei das Lüftspiel.

Nach einer weiter bevorzugten Ausführungsform der Erfindung weist das Nachstellgetriebe einen Antriebsbereich und einen Abtriebsbereich sowie eine zwischen den beiden Bereichen liegende momentenabhängige Kupplung auf. Die momentenabhängige Kupplung stellt dabei einen Überlastschutz dar.

Erfindungsgemäß bevorzugt weist die momentenabhängige Kupplung eine Torsionsfeder auf.

Die Torsionsfeder ist erfindungsgemäß weiter bevorzugt vorgespannt.

Schließlich ist es erfindungsgemäß bevorzugt vorgesehen, daß die Torsionsfeder dazu ausgelegt ist, im Bremsüberhub Energie zu speichern und damit im Lösehub die Stellspindel im Sinne einer Nachstellung zu verstellen. Durch diese Ausgestaltung ist es möglich, bei größerem Verschleiß schneller wieder das Solllüftspiel zu erreichen, einfach weil nicht nur im Bremshub, sondern zusätzlich auch im Lösehub eine Nachstellung erfolgt.

Wie bereits oben ausgeführt ist erfindungsgemäß bevorzugt das Nachstellgetriebe in wenigstens zwei Funktionsbereiche unterteilt, nämlich einen Antriebsbereich und einen Abtriebsbereich. Die beiden Bereiche liegen bevorzugt konzentrisch zueinander und sind miteinander derart gekoppelt, daß sie einander nicht nur radial, sondern auch axial tragen. Somit stellt das Nachstellgetriebe eine vormontierte kompakte Baugruppe dar. Dadurch kann im Vergleich mit herkömmlichen Bremsen, wo die einzelnen Nachstellteile axial im Sattelinneren hintereinander liegen, Bauraum eingespart werden. Weiterhin sind keine Halterungen bzw. Befestigungsteile, wie beispielsweise Bremssattelbereiche, mehr nötig, um die einzelnen Teile miteinander in Umfangsrichtung und axial zu verbinden bzw. zu koppeln.

Bevorzugt wird die Wirkverbindung zwischen der Stellspindel und dem Nachstellgetriebe auf dem der Bremsscheibe abgewandten Gewindebereich der Stellspindel realisiert, der sich aus dem verschiebbaren Element hinaus ins Sattelinnere erstreckt. Die dadurch erzielte Einsparung an Bauraum kann für großzügigere Dimensionierungen der einzelnen Teile und/oder für zusätzliche Funktionsteile genutzt werden.

Bevorzugt ist das Nachstellgetriebe in Funktionsstellung über seinen Abtriebsbereich in Axialrichtung auf dem Gewindebereich der Stellspindel durch Formschlüssigkeit derart festgelegt, daß zumindest in demjenigen Betriebszustand, in dem kein Nachstellschritt vollzogen wird, immer eine definierte Abstandsposition gegenüber dem verschiebbaren Element vorliegt. Durch ein Funktionsspiel zwischen einschlägigen zueinander weisenden Flächen des verschiebbaren Elements einerseits und des Nachstellgetriebes andererseits können auch keine die Nachstellung beeinflussenden (Haft-)Reibungen durch Verspannungen seitens der Halterung usw. auftreten.

Die Wirkverbindung des Nachstellgetriebes mit der Stellspindel zur Einstellung des Solllüftspiels ist derart ausgelegt, daß bei Lüftspielvergrößerung infolge Belagverschleißes der erforderliche Nachstellschritt bei und/oder nach einer Bremsenbetätigung erfolgen kann.

Dafür ist bevorzugt das Nachstellgetriebe mittels einer als Einwegkupplung dienenden Schlingfeder mit dem Gewindebereich der Stellspindel gekoppelt, wobei weiterhin die Schlingfeder mit vorzugsweise mindestens zwei Umschlingungen formschlüssig im Gewindeprofil der Stellspindel einliegt. Da die Schlingfeder formschlüssig und drehrichtungsabhängig in Sperrrichtung - also bei einem erforderlichen Nachstellschritt - wirkt, wird die Stellspindel in Richtung Bremsscheibe aus der Gewindebohrung des verschiebbaren Elements herausgeschraubt, wobei die Schlingfeder - und somit das gesamte Nachstellgetriebe - diese Axialverschiebung infolge der Drehung und entsprechend der Nachstellgröße mitvollzieht. Mit anderen Worten vollziehen die Stellspindel und das Nachstellgetriebe beim Nachstellschritt synchrone Bewegungen.

Damit das über die Schlingfeder auf die Stellspindel aufgeschraubte Nachstellgetriebe bei dieser Ausschraubbewegung nicht an dem verschiebbaren Element anschlägt und somit blockiert wird, ist das bereits oben genannte Funktionsspiel als Abstand zwischen den zueinanderliegenden Flächen des Nachstellgetriebes einerseits und des verschiebbaren Elements andererseits bevorzugt größer als der maximal mögliche Nachstellschritt bzw. -weg.

Somit liegt über die Formschlüssigkeit und in Sperrrichtung der Schlingfeder eine "schwimmende" Lagerung des Nachstellgetriebes mittels der Stellspindel vor.

"Schwimmend" im obigen Sinne bedeutet, daß das Nachstellgetriebe der Stellspindel zumindest über den Weg des jeweiligen Nachstellschrittes synchron folgt. Dabei verkleinert sich (vorübergehend) das oben genannte Funktionsspiel.

Ist der Nachstellschritt vollzogen und der Bremsvorgang beendet, bewegen sich die Zuspann- und Nachstellteile über die Rückstellkraft wenigstens einer Druckfeder wieder in ihre Ausgangsposition. Dabei wird das Nachstellgetriebe in Freilaufrichtung der Schlingfeder wieder in seine Ausgangsstellung und auf das oben genannte Funktionsspiel zurückgeschraubt. Damit sich dabei die Stellspindel nicht mit zurückschraubt, ist erfindungsgemäß bevorzugt ein Bremsring vorgesehen, der beispielsweise an dem verschiebbaren Element gehalten ist und mit konstantem Reibmoment auf die Stellspindel wirkt. Das dadurch auf das Außengewinde oder axial auf die Gewindeflanken der Stellspindel wirkende Reib- bzw. Haltemoment ist bevorzugt größer als das Löse- bzw. Freilaufmoment der sich öffnenden und im Gewinde einliegenden Schlingfeder. Da das genannte Reibmoment kontinuierlich wirkt, können auch beispielsweise bei Bremsenschwingungen usw. keine unerwünschten Drehbewegungen der Stellspindel mit unerwünschten Lüftspielveränderungen erfolgen.

Während das Nachstellgetriebe über den gesamten verschleißkompensierenden Nachstellweg (Bremsbelag/Bremsscheibe) in einer festgelegten und konstanten / freitragenden Position gegenüber dem verschiebbaren Element bleibt, wird die Stellspindel zunehmend in Richtung der Bremsscheibe herausgeschraubt, bis die Belagverschleißgrenze erreicht ist.

Die als Einwegkupplung wirkende Schlingfeder ist erfindungsgemäß bevorzugt innen einliegend in einem dem Nachstellgetriebe zugehörigen hülsenförmigen Abtriebsbereich (nachfolgend als Führungshülse bezeichnet) angeordnet, wobei hier erfindungsgemäß weiter bevorzugt mindestens an einem Schlingfederende ein Formschluß als Eingriff in eine Ausnehmung oder als Teilumschlingung von dem Federende an einem Ansatz/Vorsprung mit der Führungshülse besteht. Damit sind die beiden Teile umfänglich und axial aneinander festgelegt, weil die Schlingfeder aufgeschraubt / formschlüssig im Stellspindelgewinde einliegt.

Um die Positionierungen der Schlingfeder gegenüber dem Gewindebereich einerseits und der Führungshülse gegenüber der Schlingfeder andererseits noch weiter zu verbessern, weist erfindungsgemäß bevorzugt die Führungshülse eine der Gewindesteigung entsprechende Profilierung in Form einer Wendelnut auf, in der die Schlingfeder einliegt. Somit ist eine definierte Formschlüssigkeit untereinander hergestellt, die nicht nur die Funktionsgenauigkeit, sondern auch den Zusammenbau/das Aufschrauben des Nachstellgetriebes auf die Stellspindel bei der Erstmontage verbessert. Damit ist die Führungshülse mittelbar über die Schlingfeder auf dem Gewindebereich der Stellspindel positioniert.

Eine weitere Verbesserung der Halterung der Führungshülse in Axialrichtung bezüglich des Gewindebereichs der Stellspindel wird erfindungsgemäß weiter bevorzugt bei einliegender Schlingfeder durch den unmittelbaren Eingriff der Führungshülse in das von der Schlingfeder gebildete Gewinde erzielt, um gegebenenfalls Verspannungen bei Nachstell- und/oder Lösevorgängen aus dem Nachstellsystem herauszunehmen.

In diesem Falle weist dann die Führungshülse nach innen liegende, teilumfängliche und dem Gewindeverlauf der Stellspindel entsprechende Vorsprünge auf, die in das Gewinde der Stellspindel eingreifen. Die Vorsprünge sind axial gesehen bevorzugt so voneinander beabstandet, daß in deren Zwischenbereich die Schlingfeder für den Eingriff in das Gewinde einliegt, mit oder ohne Wendelnut. Dadurch wird die Schlingfeder von Axialführungen entlastet, weil die axiale Formschlüssigkeit der Führungshülse auf dem Gewinde der Stellspindel direkt mittels der Vorsprünge erfolgt.

Die oben beschriebenen Arten der mittelbaren und unmittelbaren Lagerung lassen sich je nach Bedarf beliebig miteinander kombinieren.

Als Antriebsbereich des Nachstellgetriebes dient erfindungsgemäß weiter bevorzugt ein weiteres hülsenförmiges Teil, das im Folgenden als Nutring bezeichnet ist. Der Nutring ist auf der Führungshülse relativ drehbar gelagert, wobei beide Teile bevorzugt endseitig derartige Konturen aufweisen, daß der Nutring auch axial auf der Führungshülse gehalten ist.

Der Nutring weist nach einer weiter bevorzugten Ausführungsform der Erfindung wenigstens einen axialen Nutbereich auf, der vorzugsweise radial auskragt und in den wenigstens ein mit einem der Zuspannung der Bremse dienenden Drehhebel bzw. einer solchen Bremswelle verbundener Mitnehmer, vorzugsweise ein Mitnahmestift, im Sinne einer Aktivierung des Nachstellgetriebes eingreift. In dem Anschlagspiel zwischen den Wandungen des wenigstens einen Mitnahmestifts und der wenigstens einen Axialnut wird das konstruktive Solllüftspiel vorgegeben. Die Vorgabe des Solllüftspiels kann aber auch zur weiteren Sicherstellung des Eingriffs durch zahnradähnliche Nutsegmente und mehrere beabstandete Mitnahmestifte erfolgen. Darüber hinaus ist es auch möglich, den Eingriff kinematisch umzukehren, sofern die geometrischen Verhältnisse dies erlauben. Dann wäre der Drehhebel bzw. die Bremswelle mit einer oder mehreren Nuten versehen, und der Nutring trüge einen oder mehrere Mitnahmestifte.

Um für einen Nachstellschritt eine von dem Nutring ausgehende Drehung über die Führungshülse auf die Schlingfeder - und somit auch auf die Stellspindel - zu übertragen, ist erfindungsgemäß bevorzugt auf dem Nutring ein elastisches Teil gelagert und mit dem Nutring und der Führungshülse unter Vorspannung derart gekoppelt, daß Nutring und Führungshülse über die Rückstellkraft des elastischen Teils in Umfangsrichtung gegeneinander an zueinander definierten Anschlägen verspannt werden. Bei dem elastischen Teil handelt es sich bevorzugt um eine Torsionsfeder, die mittels ihrer Federenden in vorgespanntem Zustand jeweils einen Nutringbereich und einen Führungshülsenbereich hintergreift.

Erfindungsgemäß weiter bevorzugt ist die Torsionsfeder mit einem Radialspiel bezüglich denjenigen Bauteilen angeordnet, die ihrer Lagerung dienen, hier Nutring, Führungshülse oder eine zugehörige Mitnehmerscheibe. Dadurch kann es zu keinem Aufsetzen bzw. Blockieren des Federweges bei Torsionen kommen.

Im Folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: eine teilweise geschnittene Draufsicht auf eine Scheibenbremse nach einem bevorzugten Ausführungsbeispiel der Erfindung,
- Figur 2: eine geschnittene Seitenansicht der Scheibenbremse,
- Figur 3: die gleiche Ansicht wie Figur 2, jedoch mit verschlissenen Bremsbelägen und herausgeschraubter Stellspindel,
- Figur 4: schematisch die Stellspindel mit einliegender Schlingfeder,
- Figur 5: eine Explosionsdarstellung des Nachstellgetriebes,
- Figur 6: das Nachstellgetriebe als vormontierte Baugruppe,
- Figur 7: eine schematische Schnittansicht der Stellspindel mit aufgeschraubtem Nachstellgetriebe,
- Figur 8: eine schematische perspektivische Ansicht einer Baugruppe mit Zuspanneinrichtung und aufgeschraubtem Nachstellgetriebe in Ausgangsstellung,
- Figur 9: die gleiche Ansicht wie Figur 8, jedoch teilweise geschnitten,
- Figur 10a bis 10c: Teilschnittansichten aus Figur 1 in verschiedenen Funktionsstellungen,
- Figur 11: schematisch das Nachstellgetriebe in Normalstellung und
- Figur 12: die gleiche Ansicht wie Figur 11, jedoch im Überlastbereich.

Bei der in der Zeichnung dargestellten und mit dem Bezugszeichen 1 bezeichneten Scheibenbremse handelt es sich um eine pneumatisch oder elektromechanisch betätigte Scheibenbremse, deren Bremssattel 3 eine Bremsscheibe 2 umgreift. Beidseits der Bremsscheibe 2 sind Bremsbeläge 10 mit jeweils einem Bremsbelagträger 10a vorgesehen. Eine Zuspanneinrichtung ist allgemein mit der Bezugsziffer 4 bezeichnet. Sie ist hier einseitig im Bremssattel 3 angeordnet, bei dem es sich um einen Gleitsattel oder um einen Festsattel handeln kann. Zu der Zuspanneinrichtung 4 gehört ein Drehhebel 6, der mit einer parallel zur Hauptebene 2a der Bremsscheibe 2 im Bremssattel 3 angeordneten Zuspann- bzw. Bremswelle 6a verbunden ist. Ferner ist ein sich ebenfalls quer zur Bremsscheibenebene 2a erstreckendes und im Bremssattel 3 geführtes verschiebbares Element 5 vorgesehen. Der Drehhebel 6 stellt die Verbindung zwischen einer eine Kraft einleitenden Betätigungseinrichtung (nicht gezeigt) und der Bremswelle 6a dar. Die Bremsenachse liegt parallel zu der Hauptachse (nicht gezeigt) der Bremsscheibe 2 und ist mit der Bezugszahl A-B bezeichnet.

Wird der Drehhebel 6 in hier nicht näher zu erläuternder Weise durch eine am Bremssattelende befestigte Betätigungseinrichtung mittels beispielsweise einer eine Funktionsöffnung durchdringenden Druckstange in Richtung D verschwenkt, so übt er über die quer liegende Bremswelle 6a Druck auf das verschiebbare Element 5 aus, das bei dem dargestellten Ausführungsbeispiel von einer biegesteifen Traverse der Bremse gebildet ist und undrehbar, aber axial verschieblich im Bremssattel 3 gelagert ist. Die Zuspanneinrichtung 4 wird durch mindestens eine im Bremssattel 3 angeordnete Druckfeder 9 derart verspannt, daß alle Funktionsteile aneinander und der Drehhebel 6 in seiner Ruhestellung liegen, so daß ein Verrutschen ausgeschlossen ist.

Das verschiebbare Element 5 weist mindestens eine Gewindebohrung auf, in die mindestens eine Stellspindel 7 mit einem Außengewinde 7a eingeschraubt ist. Bei dem in der Zeichnung dargestellten Ausführungsbeispiel handelt es sich um eine Einspindelbremse. Die (einzige) Stellspindel 7 ist mittig im verschiebbaren Element 5 eingeschraubt. Somit wird die Zuspannkraft entweder direkt über die Stellspindel 7 oder, wie in dem dargestellten Ausführungsbeispiel, über ein in die Stellspindel 7 eingestecktes Druckstück 8 auf den zuspannseitigen Bremsbelag 10 übertragen. Daher wird bei Betätigen des Drehhebels 6 der Bremsbelag 10 verschoben und nach Überwindung des (Soll-)Lüftspiels L gegen die Bremsscheibe 2 gedrückt.

Bremsscheibenseitig ist der alle Funktionssteile in seinem Inneren aufnehmende Bremssattel 3 durch einen Verschlußdeckel 21 verschlossen, wobei die Durchtrittsöffnung im Verschlußdeckel für die Stellspindel 7 durch wenigstens eine Faltenmanschette 22 abgedichtet ist. Damit ist der Bremssattelinnenraum diesseitig verschlossen und gegenüber beispielsweise Umwelteinflüssen geschützt.

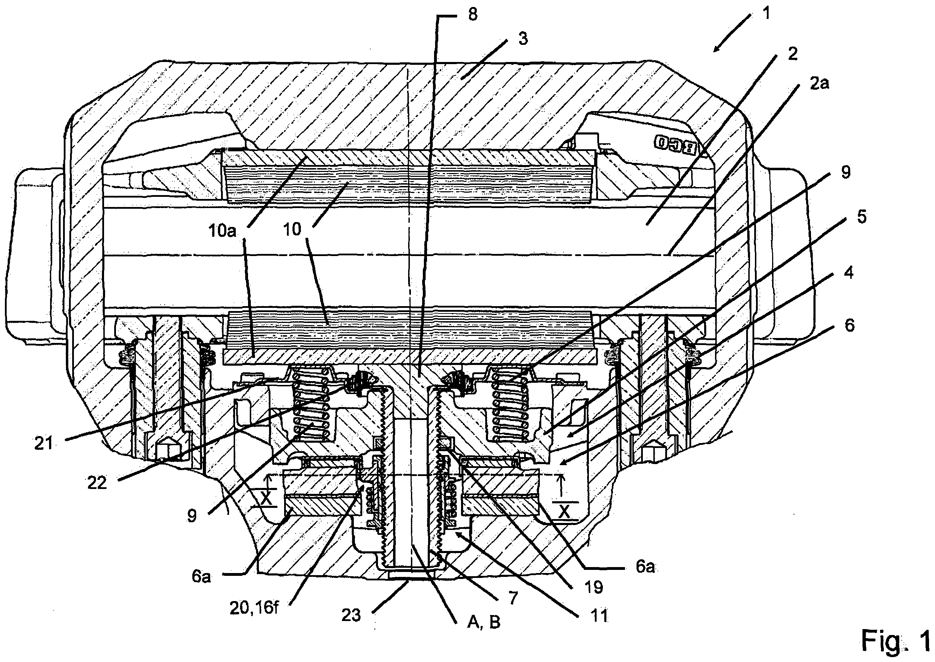

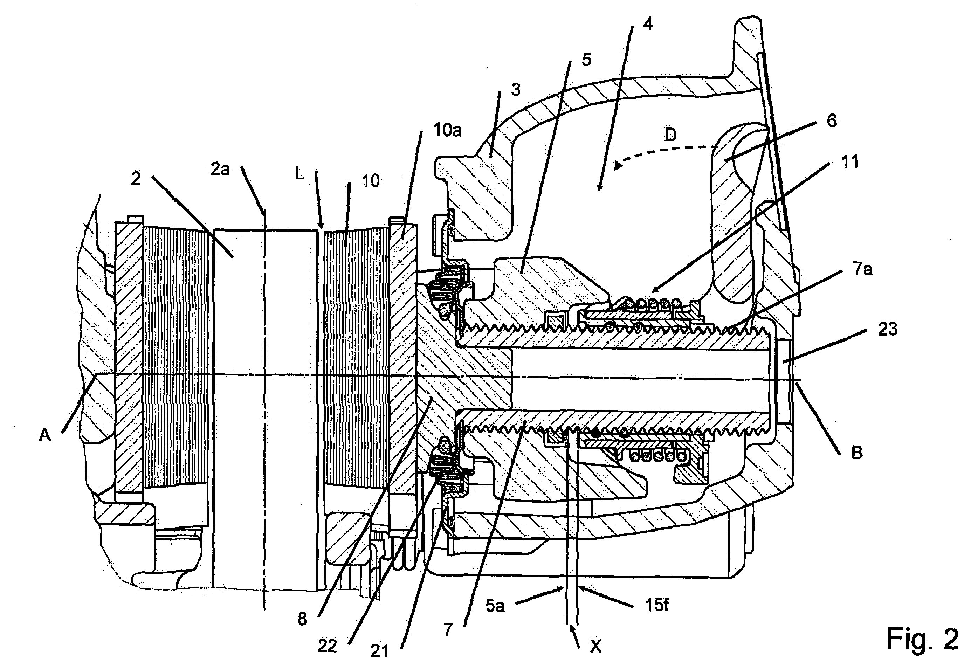

Die komplett vormontierte Baugruppe des Nachstellgetriebes ist allgemein mit der Bezugsziffer 11 bezeichnet. Sie ist in den Figuren 1 und 2 in der Ausgangsstellung bei neuen Bremsbelägen 10 dargestellt. Das auf die Stellspindel 7 unmittelbar aufgeschraubte Nachstellgetriebe 11 befindet sich dabei in der Position hinter dem verschiebbaren Element 5. Zwischen einer Stirnfläche 15f des Nachstellgetriebes 11 und einer Stirnfläche 5a des verschiebbaren Elements 5 ist ein Funktionsspiel X als Abstand vorhanden. Das Funktionsspiel X ist größer als der maximal mögliche Nachstellschritt bzw. -weg der ausschraubenden Stellspindel 7 während eines Nachstellvorgangs. Es sei angemerkt, daß die in den Figuren dargestellten Größen L, X nur der Erläuterung dienen und tatsächlich größenmäßig von dem jeweiligen Bremsentyp abhängig sind.

Die Kopplung bzw. Aktivierung des Nachstellgetriebes 11 erfolgt durch einen an der Bremswelle 6 gehaltenen Mitnahmestift 20, der in eine Axialnut 16f des Nachstellgetriebes 11 eingreift. Bei dem gezeigten Ausführungsbeispiel ist schematisch ein Bremsring 19 dargestellt, der ein konstantes Reib- bzw. Haltemoment auf die Stellspindel 7 ausübt und somit unerwünschte Drehbewegungen der Stellspindel 7 verhindert. Vorzugsweise ist der Bremsring 19 am verschiebbaren Element 5 gehalten.

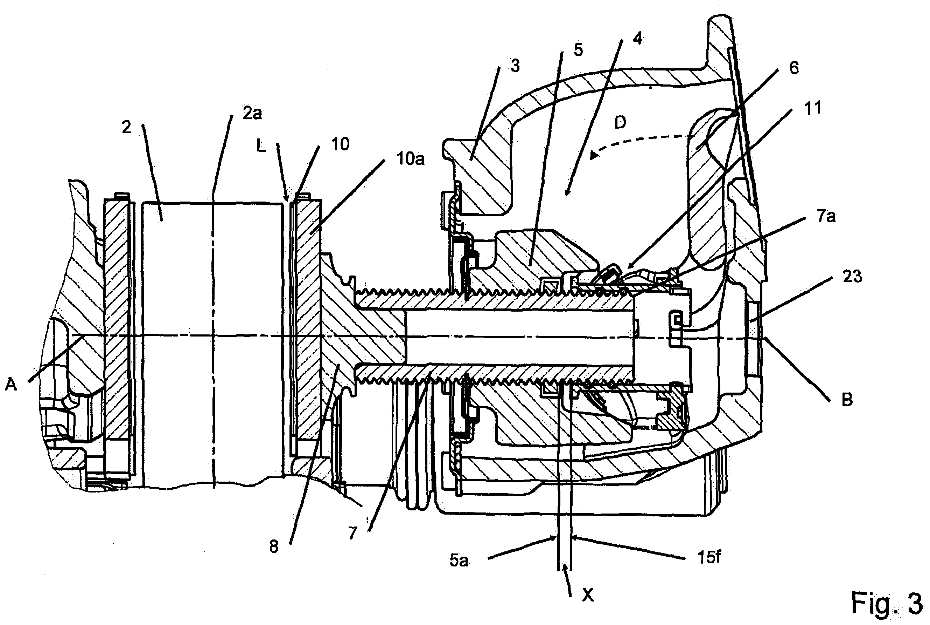

Während die Figuren 1 und 2 den Neuzustand der Bremsbeläge 10 bzw. der Bremsscheibe 2 mit entsprechender Teilelage im Bremseninnenraum zeigen, zeigt die Figur 3 schematisch den Zustand bei verschlissenen Bremsbelägen 10 mit entsprechend geänderter Teilelage. Ein Vergleich der Figur 3 mit den Figuren 1 und 2 macht deutlich, wie die Stellspindel 7 infolge der Nachstellschritte bzw. - bewegungen in Richtung der Bremsscheibe 2 aus dem verschiebbaren Element 5 und relativ zu dem Nachstellgetriebe 11 herausgeschraubt wurde, wobei alle anderen Teilepositionen erhalten bleiben. Ein entscheidender Vorteil des hier gezeigten Nachstellgetriebes besteht auch hinsichtlich der Bremssicherheit. Wird beispielsweise der maximal mögliche Belagverschleiß, aus welchem Grund auch immer, im Fahrbetrieb überschritten und die Bremse mit übermäßigem Verschleiß weiter betrieben, so wird ein übermäßiges Herausschrauben der Stellspindel 7 aus dem verschiebbaren Element 5 über die Reduzierung des Eingriffs der Schlingfeder 14 verhindert. Mit anderen Worten können keine Nachstellmomente und somit auch keine Nachstellbewegungen mehr übertragen werden. Dadurch bleibt auch in Extremzuständen der Gewindekontakt bestehen, über den im Rahmen des Belagverschleißes der vom Drehhebel ausgehende Kraftfluß beim Bremsvorgang läuft. Bei herkömmlichen Nachstellungen kann dieses Herausschrauben - mit einem sofortigen Bremsausfall - nicht zuverlässig verhindert werden.

Werden in diesem Zustand die Bremsbeläge 10 erneuert, muß die Stellspindel 7 wieder zurückgeschraubt werden, um den erforderlichen Abstand zu der Bremsscheibe 2 für die neuen Beläge herzustellen. Dafür ist bei dem hier gezeigten Ausführungsbeispiel an der Bremsenrückseite eine Funktionsöffnung 23 vorgesehen, über die in hier nicht näher zu erläuternder Weise und mit geeigneten Mitteln die Stellspindel 7 in ihre Ausgangsstellung zurückgeschraubt werden kann. Nach vollzogenem Belagwechsel ist die Teilelage dann wieder wie in den Figuren 1 und 2 dargestellt. Die Funktionsöffnung 23 ist durch geeignete Mittel dichtend zu verschließen.

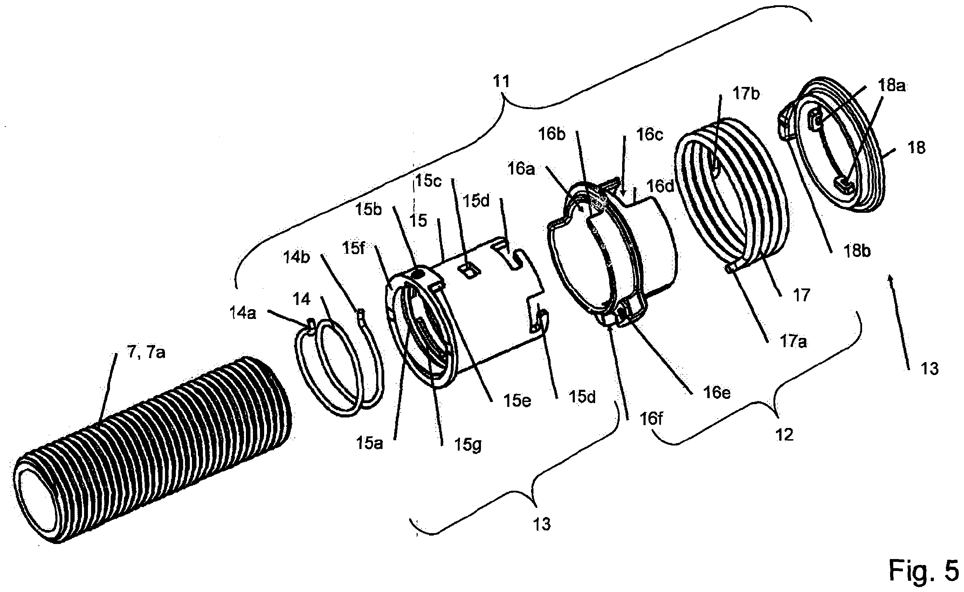

Figur 4 zeigt schematisch, wie die als Einwegkupplung wirkende - und die Wirkverbindung mit der Baugruppe Nachstellgetriebe 11 herstellende - Schlingfeder 14, die auskragende Enden 14a, 14b aufweist, formschlüssig in dem Außengewinde 7a der Stellspindel 7 einliegt. Diese Einzelheit ist montiert nicht mehr klar sichtbar.

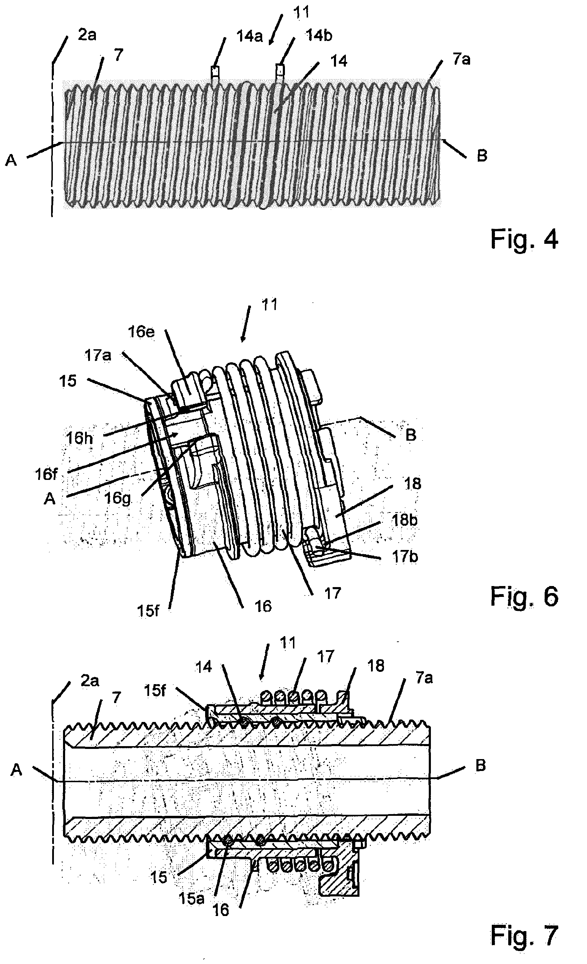

Figur 5 zeigt in Explosionsdarstellung das Nachstellgetriebe 11 mit den Teilen, die einem Antriebsbereich 12 und einem Abtriebsbereich 13 zuzuordnen sind. Zu dem Antriebsbereich 12 gehört ein Nutring 16. Zu dem Abtriebsbereich 13 gehört die Schlingfeder 14, eine Führungshülse 15 und eine mit dieser verbundene Mitnehmerscheibe 18, wobei die Verbindung reib-, stoff-, kraft- und/oder formschlüssig ausgebildet sein kann. Zwischen dem Antriebsbereich 12 und dem Abtriebsbereich 13 liegt eine Torsionsfeder 17. Im Rahmen der Erfindung ist es bei geeigneter Werkstoffauswahl jedoch auch möglich, die Führungshülse 15 mit der Mitnehmerscheibe 18 mit den erforderlichen Funktionskonturen einstückig herzustellen. Hierzu müssen dann lediglich für den weiteren Teilezusammenbau, wie beispielsweise Halterung/Befestigung der Torsionsfeder 17 und des Nutrings 16, diese Teile unter Beibehaltung ihrer Grundfunktionen entsprechend ausgebildet sein.

Die Führungshülse 15 nimmt in ihrem Innenraum die Schlingfeder 14 auf, wobei die Schlingfeder 14 in/an funktionell vorgegebenen Einlage- und/oder Haltebereichen der Führungshülse 15 axial fest positioniert ist. Dafür ist an der Führungshülse 15 einerseits ein Radialansatz oder Vorsprung 15b vorhanden. Entweder greift hier ein abstehendes Federende 14a der Schlingfeder 14 in eine Halteöffnung ein, oder das Ende 14a der Schlingfeder 14 umgreift schlingenförmig den Vorsprung 15b, um in Umfangsrichtung damit gekoppelt zu sein. Das andere abstehende Ende 14b der Schlingfeder 14 greift in eine relativ umfänglich verlaufende Längsöffnung 15c der Führungshülse 15 ein. Damit sind die Schlingfeder 14 und die Führungshülse 15 miteinander gekoppelt. Damit die in dem Außengewinde 7a der Stellspindel 7 einliegende Schlingfeder 14 die Formschlüssigkeit nicht nur auf die Führungshülse 15, sondern noch effizienter auch auf die Baugruppe Nachstellgetriebe 11 überträgt, ist bei dem in der Zeichnung dargestellten Ausführungsbeispiel in der Führungshülse 15 eine Wendelnut 15a mit einer der Steigung der Schlingfeder entsprechenden Steigung ausgebildet. Sie dient der verläßlichen Kontaktanlage. Wie bereits oben erläutert, kann die Führungshülse 15 auch nach innen liegende teilumfängliche und dem Gewindeverlauf der Stellspindel 7 entsprechende Vorsprünge/Ausformungen 15g aufweisen, die in das Außengewinde 7a der Stellspindel 7 eingreifen. Diese Vorsprünge/Ausformungen 15g sind in Axialrichtung derart voneinander beabstandet, daß dazwischen die Schlingfeder 14 für den Eingriff in das Außengewinde 7a einliegen kann, ob mit oder ohne Wendelnut 15a. Dadurch wird die Schlingfeder 14 von Axialführungen entlastet. Die axiale Formschlüssigkeit der Führungshülse 15 auf dem Außengewinde 7a erfolgt nämlich direkt mittels der Vorsprünge/Ausformungen 15g. Diese Art der mittelbaren und/oder unmittelbaren Lagerung läßt sich je nach Bedarf beliebig kombinieren. Zwischen der Schlingfeder 14 und der Innenwand der Führungshülse 15 ist ein radiales Funktionsspiel vorhanden, so daß sich die Schlingfeder 14 in Öffnungs- bzw. Löserichtung ausreichend aufweiten kann. Dadurch ist die Leichtgängigkeit des Nachstellgetriebes 11 in diese Richtung gewährleistet.

An einem Radialansatz 15b der Führungshülse 15 ist eine in Umfangsrichtung ausgebildete Anschlagfläche 15e vorhanden, deren Funktion später noch erläutert wird. Den diesseitigen Abschluß der Führungshülse 15 bildet ein umfänglicher Radialbund, dessen Stirnfläche 15f im Einbauzustand der Stirnfläche 5a des axial verschiebbaren Elements 5 gegenüberliegt, wobei dazwischen das bereits oben erläuterte Funktionsspiel X ausgebildet ist. An dem anderen Ende der Führungshülse 15 wird bei der Komplettierung des Nachstellgetriebes 11 ortsfest die Mitnehmerscheibe 18 befestigt. Je nach Ausführung kann dies eine reib-, stoff-, kraft- oder formschlüssige Verbindung sein. Bei der in der Zeichnung dargestellten Ausführungsform sind umfängliche Profilöffnungen 15d an der Führungshülse 15 und Rastvorsprünge 18a an der Mitnehmerscheibe 18 vorgesehen, um die beiden Teile bayonettartig miteinander zu verriegeln. Für die weitere Nachstellfunktion erforderlich weist die Mitnehmerscheibe 18 einen radial auskragenden Vorsprung 18b auf.

Der drehbar auf der Führungshülse 15 gelagerte Nutring 16 weist (in der Zeichnung links) eine in Umfangsrichtung verlaufende längliche Ausnehmung 16a auf, die (in der Zeichnung unten) eine Anschlagfläche 16b ausbildet. Die Ausnehmung 16a ist derart bemessen, daß darin ein Radialansatz 15b mit einer Anschlagfläche 15e der Führungshülse 15 eingreift. Die beiden Anschlagflächen 15e und 16b liegen dabei einerseits aneinander. Andererseits ist eine relative Drehbarkeit des Nutrings 16 auf der Führungshülse 15 entsprechend der Länge der Ausnehmung 16a möglich. Der Nutring 16 weist ferner einen Radialansatz 16e auf, der einerseits der formschlüssigen Lagerung/Halterung eines abgewinkelten Federendes 17a der Torsionsfeder dient, und an dem andererseits vom Haltebereich beabstandet eine Axialnut 16f mit Nutwandungen 16g, 16h ausgebildet ist. In die Axialnut 16f greift zur Nachstellaktivierung der bereits erwähnte Mitnahmestift 20 ein. Hier in der Zeichnung rechts liegend ist im Nutring 16 eine weitere längliche Ausnehmung 16c vorgesehen, in deren Öffnungsbereich sich das eine Öffnung 15c der Führungshülse 15 durchdringende Ende 14b der Schlingfeder 14 erstreckt. Auch diese Länge ist derart bemessen, daß eine relative Drehbarkeit des Nutrings 16 auf der Führungshülse 15 entsprechend der Länge der Ausnehmung 16c möglich ist. Umgekehrt ist es auch möglich, wenn die Anschlagfläche 16d gegen den Federschenkel 14b im Sinne einer Öffnung der Schlingfeder 14 drückt.

Beim Zusammenbau der oben im Einzelnen erläuterten Teile wird die Torsionsfeder 17 mittels ihrer Federenden 17a, 17b und unter einem entsprechenden Vorspannwinkel hinter den Haltebereichen 16e, 18b verbaut. Durch ihre Rückstellkraft werden dabei zum einen der Nutring 16 und zum anderen über die Mitnehmerscheibe 18 die Führungshülse 15 an deren Anschlagflächen 15e, 16b gegeneinander vorgespannt.

An dieser Stelle wird ausdrücklich darauf hingewiesen, daß bei dem in der Zeichnung dargestellten Ausführungsbeispiel der Erfindung die der Vorspannung und dem Nachstellen dienenden Teile bzw. Funktionsbereiche des Nachstellgetriebes 11 in montiertem Zustand, wie beispielsweise die Teile 15e, 16a, b, e, f, 17a, b und 18b in Umfangsrichtung gesehen in konstruktiv vorgegebenen Abmessungen und/oder Winkelstellungen zueinander stehen bzw. liegen.

Die selbsttragende und vormontierte Baugruppe des Nachstellgetriebes 11 zeigt die Figur 6, wo auch die Axialnut 16f mit den Wandungen 16g, 16h gezeigt ist.

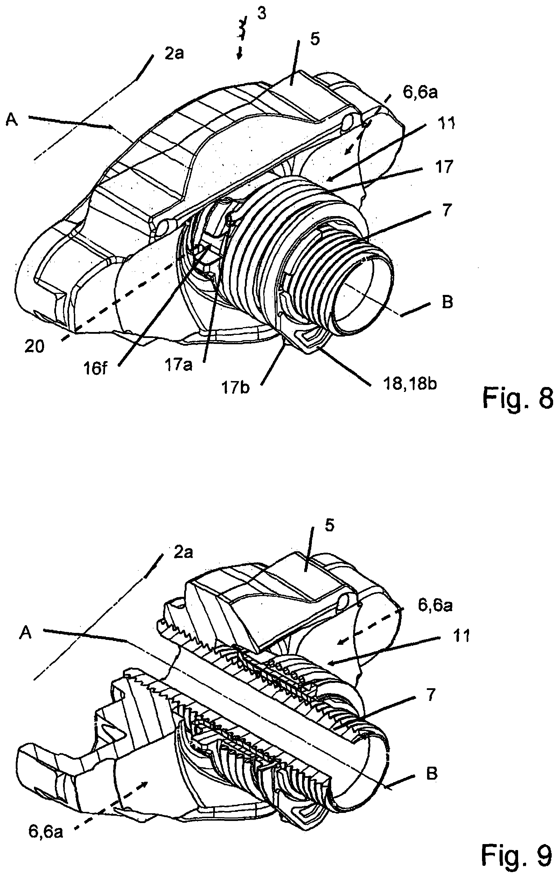

Nach Figur 7 wird das Nachstellgetriebe 11 formschlüssig mittels der Schlingfeder 14 auf die Stellspindel 7 mit dem Außengewinde 7a aufgeschraubt. Anschließend erfolgt nach den Figuren 8, 9 der Einbau/das Einschrauben der Stellspindel 7 mit dem Nachstellgetriebe 11 in das verschiebbare Element 5.

Die Einbaulagen/Abstände der einzelnen Bauteile zueinander sind derart bemessen, daß sowohl die Ausrichtung der Axialnut 16f als auch das für den ungehinderten Nachstellvorgang erforderliche Funktionsspiel X für den Komplettzusammenbau mit weiteren Teilen der Zuspanneinrichtung voreinstellbar sind. Die Einbau- und Funktionslagen zeigen die Figuren 1, 2. Auf die obigen Erläuterungen wird verwiesen.

Im Folgenden ist der Vorgang des Nachstellens im Einzelnen dargestellt, insbesondere unter Bezugnahme auf die Figuren 2, 10, 11 und 12.

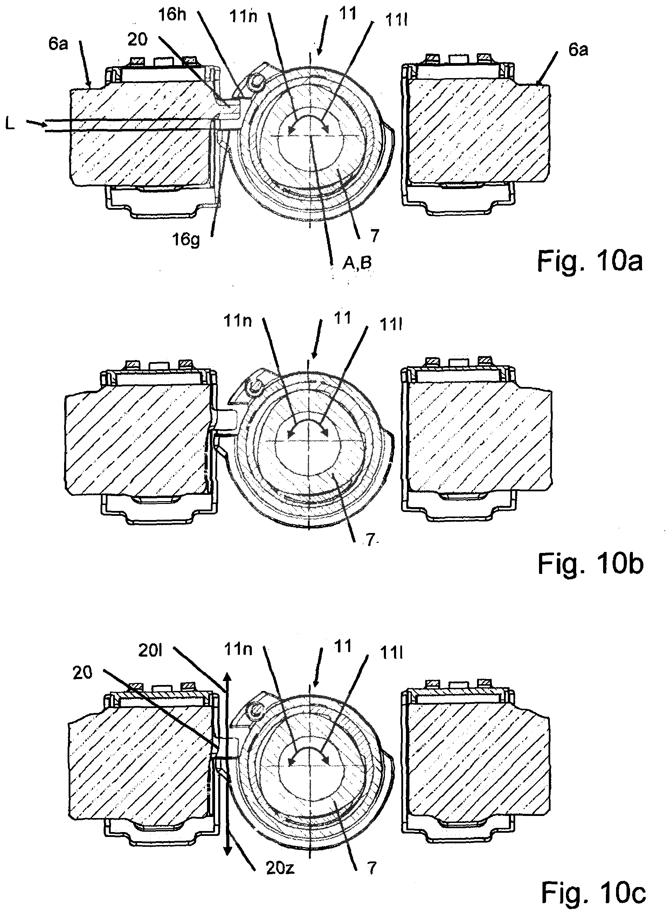

Wird die Bremse nach Figur 2 mittels einer am Bremssattel 3 angebrachten und in der Zeichnung nicht gezeigten Betätigungseinrichtung betätigt, erfolgt ein Verschwenken des Drehhebels 6 in Richtung D, wobei über die Bremswelle 6a die vorgelagerten Zuspannteile gegen die Federkraft der Druckfedern 9 entlang der Achse A-B mit dem Bremsbelag 10 in Richtung der Bremsscheibe 2 verschoben werden. Dabei wird der Leerhub überwunden, der dem Solllüftspiel L entspricht. Das Solllüftspiel L wird hier konstruktiv nach Figur 10a als Anschlagspiel zwischen den Wandungen der Axialnut 16 und dem Mitnahmestift 20 vorgegeben. Der Mitnahmestift 20 liegt anfänglich an der oberen Nutwand 16h an. Liegt der Leer- bzw. Anlegehub innerhalb des Solllüftspiels L, erfolgt keine Nachstell-, sondern nur eine Zuspannbewegung.

Liegt eine Lüftspielveränderung mit Abweichung vom Solllüftspiel L vor, und der Drehhebel 6 wird weiter verdreht, drückt der Mitnahmestift 20 in Richtung 20z gegen die Nutwand 16g und der Nutring 16 wird verdreht. Über die Steifigkeit/Starrheit bzw. das Vorspannmoment M2 der Torsionsfeder 17, die bei dem in der Zeichnung dargestellten Ausführungsbeispiel degressiv ausgelegt ist, dreht der Nutring 16 die mit der Führungshülse 15 verbundene Mitnehmerscheibe 18, so daß die zwischen der Führungshülse 15 und dem Außengewinde 7a der Stellspindel 7 einliegende Schlingfeder 14 wegen ihrer Drehung in Sperrrichtung das Drehmoment auf die Stellspindel 7 überträgt. Da das Vorspannmoment M2 größer als das von dem Bremsring 19 auf die Stellspindel 7 wirkende Reibmoment M1 ist, verdreht sich die Stellspindel 7 und das Lüftspiel wird reduziert. Dabei folgt das Nachstellgetriebe 11 in Nachstellrichtung 11n unter Verkleinerung des Funktionsspiels X der Bewegung der Stellspindel 7 synchron.

Wird der Drehhebel 6 einschließlich der Bremswelle 6a nach dem Bremsvorgang über die Druckfedern 9 zurückbewegt, bewegt sich der Mitnahmestift 20 in Löserichtung 20l und dreht unter Anschlagen an der Nutwand 16h den Nutring 16 in die Ausgangsposition zurück. Da das von dem Bremsring 19 auf die Stellspindel 7 wirkende Reibmoment M1 größer als das Freilaufmoment M3 der Schlingfeder 14 ist, wird die Schlingfeder 14 mit den übrigen Teilen des Nachstellgetriebes 11 in Löserichtung 11l auf der sich nicht mitdrehenden Stellspindel 7 zurückgedreht, bis es wieder in seine Ausgangsstellung mit dem Funktionsspiel X gelangt.

Damit ist das Solllüftspiel L wieder eingestellt.

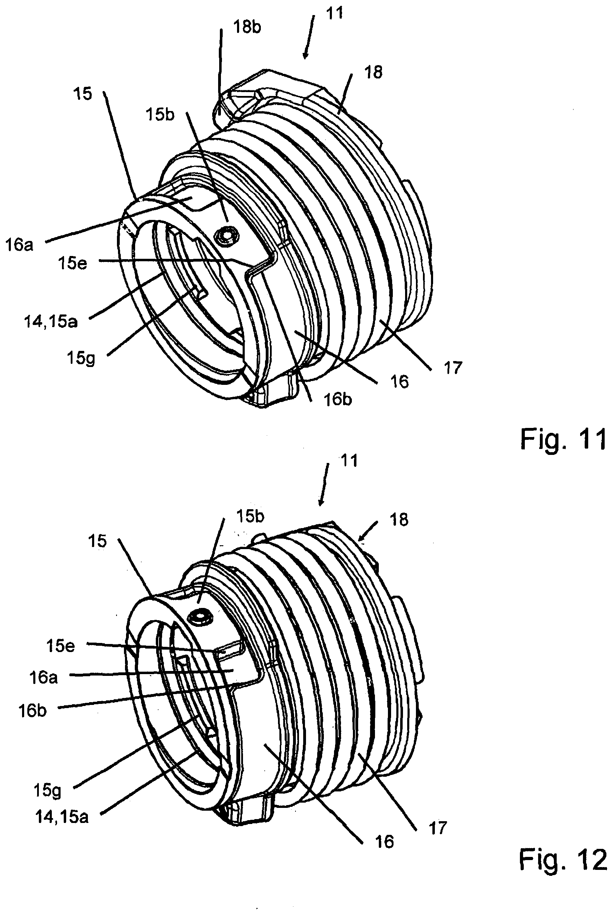

Finden Bremsbetätigungen statt, die entweder über den normalen Bremshub mit entsprechenden elastischen Verformungen beispielsweise des Bremssattels 3 hinausgehen, oder stellt sich bei Bergabfahrten durch Dauerbremsungen ein erhöhter Belagverschleiß ein, steigt durch den Überhub das Moment an der Schlingfeder 14 stark an und die Drehbewegung der Führungshülse 15 wird gestoppt. Die weitere Drehbewegung des Nutrings 16, angetrieben durch den Mitnahmestift 20 in Zuspannrichtung 20z, erzeugt somit eine Verformung der Torsionsfeder 17 über die Vorspannung des Systems hinaus. Dabei dreht sich der Nutring 16 mit der Ausnehmung 16a weiter und hebt dabei mit seiner Anschlagfläche 16b von der Anschlagfläche 15e der Führungshülse 15 ab, vgl. Figur 12. Da bei dem in der Zeichnung dargestellten Ausführungsbeispiel die Torsionsfeder 17 degressiv ausgelegt ist, wird nur ein relativ geringer Anstieg des Federmoments durch den Überhub erzeugt. Das Vorspannmoment M4 der Torsionsfeder 17 infolge ihrer Zusammenziehung/Verformung in der Endposition ist jedoch niedriger als das minimal notwendige und übertragbare Sperrmoment M5 der Schlingfeder 14 bezüglich der Stellspindel 7.

Schwenkt der Drehhebel 6 mit der Bremswelle 6a nach dem Bremsvorgang in seine Ausgangsstellung zurück, dreht sich der Nutring 16 wegen der Bewegung des Mitnahmestiftes 20 in Richtung 20l zurück, bis die Vorspannung der Torsionsfeder 17 wieder erreicht ist. Dann liegen auch die Anschlagflächen 15e und 16b wieder aneinander an. Dies entspricht der Ausgangsposition nach Figur 11.

Somit wird eine übermäßige Nachstellung vermieden, weil die Torsionsfeder 17 den Überhub in ihre Verformung aufnimmt. Anders als bei bekannten Scheibenbremsen wirkt sie somit nicht als mechanische Trenneinrichtung mit entsprechenden Kopplungsteilen.

Ein weiterer Vorteil der Torsionsfeder 17 bei dem in der Zeichnung dargestellten Ausführungsbeispiel liegt darin, daß sie durch Verformung im Überhub Energie speichert und im Rückhub des Drehhebels 6 durch Entspannung eine Nachstellbewegung über das Nachstellgetriebe 11 auf die Stellspindel 7 bewirkt, bis die Teile des Nachstellgetriebes 11 wieder im vorgespannten Ausgangszustand verspannt sind und die Anschlagflächen 15e und 16b aneinander anliegen.

Somit ist es durch die oben beschriebene Ausgestaltung der Baugruppe des Nachstellgetriebes 11 möglich, mit einfachen Mitteln erforderliche Nachstellbewegungen wirkungsvoll und ohne die aus herkömmlichen Bremsen bekannten mechanischen Trennkupplungen zu steuern. Dabei kann auch die Anzahl der Nachstellschritte zur Einstellung des Solllüftspiels im Vergleich mit bekannten Bremsen verringert werden, weil der Nachstellvorgang je nach Gegebenheit bzw. Ablauf des Bremsvorganges in beide Bewegungsrichtungen des Drehhebels erfolgen kann. Damit ist das Solllüftspiel schneller nachzustellen als bei herkömmlichen Lösungen, die nur bei Bewegung in einer Richtung nachstellen. Dadurch kann indirekt auch der Bremsenhub bzw. die Bremseneffizienz verbessert werden.

Sind beispielsweise im Rahmen von Servicearbeiten an der Bremse selbst oder bei einem Bremsbelagwechsel manuelle Justierungen erforderlich, so erfolgt dies durch Verdrehung der Stellspindel 7 in Zustell- oder Löserichtung durch geeignete Mittel über die bereits oben genannte Funktionsöffnung 23 an der Rückseite des Bremssattels 3.

Hinsichtlich der Materialauswahl für das Nachstellgetriebe 11 sei angemerkt, daß insbesondere die Führungshülse 15, der Nutring 16 und die Mitnehmerscheibe 18 aus gleichen oder unterschiedlichen Werkstoffen hergestellt sein können, wie beispielsweise Metall, Blechformteile, Sintermaterial und/oder Kunststoff.

Obwohl die Erfindung anhand einer Einspindelbremse erläutert worden ist, ist das erfindungsgemäße Nachstellgetriebe auch bei einer Zwei- oder Mehrspindelbremse einsetzbar. Dabei kann beispielsweise bei einer Zweispindelbremse jede Stellspindel mit einem eigenen Nachstellgetriebe bestückt sein. Alternativ kann die Nachstellbewegung von nur einem einzigen Nachstellgetriebe mittels entsprechender Synchroneinrichtung auf die andere Stellspindel gleichlaufend übertragen werden.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 1: Scheibenbremse
- 2: Bremsscheibe
- 2a: Bremsscheibenebene
- 3: Bremssattel
- 4: Zuspanneinrichtung
- 5: verschiebbare Element (Druckstück / Traverse / Brücke)
- 5a: Stirnfläche axial (in Richtung 15f)
- 6: Drehhebel
- 6a: exzentrische Bremswelle
- 7: Stellspindel
- 7a: Außengewinde der Stellspindel
- 8: Druckstück
- 9: Rückstellfeder als Druckfeder
- 10: Bremsbelag
- 10a: Bremsbelagträger
- 11: Nachstellgetriebe
- 11n: Nachstellrichtung (von 11)
- 11l: Löserichtung (von 11)
- 12: Antriebsbereich
- 13: Abtriebsbereich
- 14: Schlingfeder (Einwegkupplung)
- 14a,b: Ende / n Schlingfeder
- 15: Führungshülse
- 15a: profilierte Wendelnut
- 15b: Radialansatz mit Öffnung oder Vorsprung (für 14a)
- 15c: Längsöffnung (für 14b)
- 15d: Profilöffnungen (für 18a)
- 15e: Anschlagfläche (für 16b)
- 15f: Stirnfläche axial (in Richtung 5a)
- 15g: Vorsprünge / Ausformungen (an 15)
- 16: Nutring
- 16a: Ausnehmung / Öffnung (für 15b)
- 16b: Anschlagfläche (für 15e)
- 16c: Ausnehmung / Öffnung (für 14b)
- 16d: Anschlagfläche (für 14b)
- 16e: Radialansatz mit Öffnung (für 17a)
- 16f: Axialnut (für 20)
- 16g: Nutwand
- 16h: Nutwand
- 17: Drehfeder / Torsionsfeder
- 17a, b: Ende / n Drehfeder / Torsionsfeder
- 18: Mitnehmerscheibe
- 18a: Rastvorsprung (für 15d)
- 18b: Vorsprung (für 17b)
- 19: Bremsring
- 20: Mitnahmestift (an 6a)
- 20z: Zuspannrichtung (von 20)
- 20l: Löserichtung (von 20)
- 21: Verschlussdeckel (an 3)
- 22: Faltenmanschette
- 23: Funktionsöffnung (an 3)
- L: Leerweg / Lüftspiel
- X: Funktionsspiel (zwischen 5a und 15f)
- D: Schwenkrichtung Drehhebel
- A-B: Zuspann- und Drehachse der Stellspindel
- M1: konstantes Reibmoment vom Bremsring
- M2: Vorspannmoment der Dreh- bzw. Torsionsfeder
- M3: Freilaufmoment Schlingfeder
- M4: Vorspannmoment der Dreh- bzw. Torsionsfeder in Endposition
- M5: minimales notwendiges übertragbares Sperrmoment der Schlingfeder

## Patentansprüche

1. Scheibenbremse, insbesondere für Nutzfahrzeuge, mit
einer Bremsscheibe (2),
einem Bremssattel (3),
mindestens einer auf einer Seite der Bremsscheibe (2) innerhalb des Bremssattels (3) liegenden Zuspanneinrichtung (4),
einer axialverschieblichen Einrichtung (5), die bei Betätigung der Bremse einen Bremsbelag (10) mittels mindestens einer Stellspindel (7) axial in Richtung der Bremsscheibe (2) verschiebt, wobei die Stellspindel (7) drehbar ist, ein Außengewinde (7a) aufweist und in eine Gewindebohrung in der verschieblichen Einrichtung (5) eingeschraubt ist, und
einem Nachstellgetriebe (11), das um eine parallel zur Drehachse der Bremsscheibe (2) liegende Drehachse (A-B) verdrehbar ist und bei Verdrehen in einer ein Nachstellen bewirkenden ersten Drehrichtung (11n) wegen einer in dieser Drehrichtung wirkenden Drehkopplung die Stellspindel (7) verdreht,
**dadurch gekennzeichnet, daß**
das Nachstellgetriebe (11) eine Gewindeeinrichtung (14) aufweist, die zumindest bei einem Verdrehen in einer der ersten Drehrichtung (11n) entgegengesetzten zweiten Drehrichtung (11l) mit dem Außengewinde (7a) der Stellspindel (7) kämmt und das Nachstellgetriebe (11) bezüglich der Stellspindel (7) verschraubt.

2. Scheibenbremse nach Anspruch 1, **dadurch gekennzeichnet, daß** die Gewindeeinrichtung (14) eine Schlingfeder ist, die die gleiche Steigung wie das Außengewinde (7a) der Stellspindel (7) hat.

3. Scheibenbremse nach Anspruch 2, **dadurch gekennzeichnet, daß** zwei oder mehr Windungen der Schlingfeder (14) mit dem Außengewinde (7a) der Stellspindel (7) kämmen.

4. Scheibenbremse nach Anspruch 2 oder 3, **dadurch gekennzeichnet, dass** ein Endabschnitt (14a) der Schlingfeder (14) an einer Führungshülse (15) des Nachstellgetriebes (11) gehalten ist, vorzugsweise durch Formschluß.

5. Scheibenbremse nach Anspruch 4, **dadurch gekennzeichnet, dass** die Führungshülse (15) mindestens eine Gewindeeinrichtung (15g) aufweist, die mit dem Außengewinde (7a) der Stellspindel (7) kämmt.

6. Scheibenbremse nach einem der Ansprüche 2 - 4, **dadurch gekennzeichnet, daß** die Schlingfeder (14) radial außen in einer Wendelnut (15a) liegt.

7. Scheibenbremse nach einem der vorangehenden Ansprüche, **dadurch gekennzeichnet, daß** das Nachstellgetriebe (11) um mindestens eine Strecke (X) axial verschieblich ist, die der maximalen Nachstellstrecke pro Nachstellschritt entspricht.

8. Scheibenbremse nach einem der vorangehenden Ansprüche, **gekennzeichnet durch** eine einem Verdrehen der Stellspindel (7) entgegenwirkende Bremseinrichtung (19).

9. Scheibenbremse nach einem der vorangehenden Ansprüche, **gekennzeichnet durch** wenigstens eine Nut (16f) an dem Nachstellgetriebe (11), deren Weite einem Solllüftspiel (L) entspricht.

10. Scheibenbremse nach einem der vorangehenden Ansprüche, **dadurch gekennzeichnet, daß** das Nachstellgetriebe (11) einen Antriebsbereich (12) und einen Abtriebsbereich (13) sowie eine zwischen den beiden Bereichen (12, 13) liegende momentenabhängige Kupplung (17) aufweist.

11. Scheibenbremse nach Anspruch 10, **dadurch gekennzeichnet, daß** die momentenabhängige Kupplung (17) eine Torsionsfeder aufweist.

12. Scheibenbremse nach Anspruch 11, **dadurch gekennzeichnet, daß** die Torsionsfeder (17) vorgespannt ist.

13. Scheibenbremse nach Anspruch 11 oder 12, **dadurch gekennzeichnet, daß** die Torsionsfeder (17) dazu ausgelegt ist, im Bremsüberhub Energie zu speichern und damit im Lösehub die Stellspindel (7) im Sinne einer Nachstellung zu verstellen.

## Claims

1. Disk brake, in particular for commercial vehicles, having
a brake disk (2),
a brake caliper (3),
at least one application device (4) lying within the brake caliper (3) on one side of the brake disk (2),
an axially movable device (5), which moves a brake pad (10) axially toward the brake disk (2) by means of at least one actuating spindle (7) when the brake is actuated, wherein the actuating spindle (7) can be rotated, has an external thread (7a), and is screwed into a threaded bore in the movable device (5), and
an adjustment mechanism (11), which can be rotated about a rotation axis (A-B) lying parallel to the rotation axis of the brake disk (2) and which, in the case of rotation in a first direction of rotation (lln) bringing about adjustment, rotates the actuating spindle (7) because of a rotational coupling acting in said direction of rotation,
**characterized in**
**that** the adjustment mechanism (11) has a thread device (14), which, at least in the case of rotation in a second direction of rotation (111) opposite the first direction of rotation (11n), meshes with the external thread (7a) of the actuating spindle (7) and screws the adjustment mechanism (11) in relation to the actuating spindle (7) .

2. Disk brake according to Claim 1, **characterized in that** the thread device (14) is a wrap spring, which has the same pitch as the external thread (7a) of the actuating spindle (7).

3. Disk brake according to Claim 2, **characterized in that** two or more turns of the wrap spring (14) mesh with the external thread (7a) of the actuating spindle (7).

4. Disk brake according to Claim 2 or 3, **characterized in that** an end section (14a) of the wrap spring (14) is held on a guide sleeve (15) of the adjustment mechanism (11), preferably by positive engagement.

5. Disk brake according to Claim 4, **characterized in that** the guide sleeve (15) has at least one thread device (15g), which meshes with the external thread (7a) of the actuating spindle (7).

6. Disk brake according to one of Claims 2-4, **characterized in that** the wrap spring (14) rests radially on the outside in a spiral groove (15a).

7. Disk brake according to one of the preceding claims, **characterized in that** the adjustment mechanism (11) can be moved axially by at least a distance (X) which corresponds to the maximum adjustment distance per adjustment step.

8. Disk brake according to one of the preceding claims, **characterized by** a braking device (19) which counteracts rotation of the actuating spindle (7) .

9. Disk brake according to one of the preceding claims, **characterized by** at least one groove (16f) on the adjustment mechanism (11), the width of which corresponds to a desired release clearance (L) .

10. Disk brake according to one of the preceding claims, **characterized in that** the adjustment mechanism (11) has an input region (12) and an output region (13) as well as a torque-dependent clutch (17) situated between the two regions (12, 13) .

11. Disk brake according to Claim 10, **characterized in that** the torque-dependent clutch (17) has a torsion spring.

12. Disk brake according to Claim 11, **characterized in that** the torsion spring (17) is preloaded.

13. Disk brake according to Claim 11 or 12, **characterized in that** the torsion spring (17) is designed to store energy in the braking overstroke and hence to adjust the actuating spindle (7) in the release stroke for purposes of brake adjustment.

## Revendications

1. Frein à disque, en particulier pour véhicules utilitaires, comprenant
un disque de frein (2),
un étrier de frein (3),
au moins un dispositif de serrage (4) situé d'un côté du disque de frein (2) à l'intérieur de l'étrier de frein (3),
un dispositif déplaçable axialement (5), qui, lors de l'actionnement du frein, déplace une garniture de frein (10) au moyen d'au moins une broche de réglage (7) axialement dans la direction du disque de frein (2), la broche de réglage (7) pouvant tourner, présentant un filetage extérieur (7a) et étant vissée dans un alésage fileté dans le dispositif déplaçable (5), et
un mécanisme de rattrapage (11) qui peut tourner autour d'un axe de rotation (A-B) situé parallèlement à l'axe de rotation du disque de frein (2) et qui fait tourner la broche de réglage (7) lors de la rotation dans un premier sens de rotation provoquant un rattrapage (11n), à l'encontre d'un accouplement de rotation agissant dans ce sens de rotation,
**caractérisé en ce que**
le mécanisme de rattrapage (11) présente un dispositif fileté (14) qui, au moins lors d'une rotation dans un deuxième sens de rotation (11l) opposé au premier sens de rotation (11n), s'engrène avec le filetage extérieur (7a) de la broche de réglage (7) et visse le mécanisme de rattrapage (11) par rapport à la broche de réglage (7) .

2. Frein à disque selon la revendication 1, **caractérisé en ce que** le dispositif fileté (14) est un ressort à enroulement qui présente le même pas que le filetage extérieur (7a) de la broche de réglage (7).

3. Frein à disque selon la revendication 2, **caractérisé en ce que** deux ou plus de deux enroulements du ressort à enroulement (14) s'engrènent avec le filetage extérieur (7a) de la broche de réglage (7).

4. Frein à disque selon la revendication 2 ou 3, **caractérisé en ce qu'**une portion d'extrémité (14a) du ressort à enroulement (14) est retenue au niveau d'une douille de guidage (15) du mécanisme de rattrapage (11), de préférence par engagement par correspondance de formes.

5. Frein à disque selon la revendication 4, **caractérisé en ce que** la douille de guidage (15) présente au moins un dispositif fileté (15g) qui s'engrène avec le filetage extérieur (7a) de la broche de réglage (7).

6. Frein à disque selon l'une quelconque des revendications 2 à 4, **caractérisé en ce que** le ressort à enroulement (14) est situé radialement à l'extérieur dans une rainure hélicoïdale (15a).

7. Frein à disque selon l'une quelconque des revendications précédentes, **caractérisé en ce que** le mécanisme de rattrapage (11) est déplaçable axialement sur au moins une distance (X) qui correspond à la distance de rattrapage maximale par étape de rattrapage.

8. Frein à disque selon l'une quelconque des revendications précédentes, **caractérisé par** un dispositif de frein (19) agissant à l'encontre d'une rotation de la broche de réglage (7).

9. Frein à disque selon l'une quelconque des revendications précédentes, **caractérisé par** au moins une rainure (16f) au niveau du mécanisme de rattrapage (11), dont la largeur correspond à un jeu de consigne (L).

10. Frein à disque selon l'une quelconque des revendications précédentes, **caractérisé en ce que** le mécanisme de rattrapage (11) présente une région d'entraînement (12) et une région de sortie (13) ainsi qu'un embrayage dépendant du couple (17) situé entre les deux régions (12, 13).

11. Frein à disque selon la revendication 10, **caractérisé en ce que** l'embrayage dépendant du couple (17) présente un ressort de torsion.

12. Frein à disque selon la revendication 11, **caractérisé en ce que** le ressort de torsion (17) est précontraint.

13. Frein à disque selon la revendication 11 ou 12, **caractérisé en ce que** le ressort de torsion (17) est conçu pour stocker de l'énergie dans le cas d'une surcourse de freinage et ainsi pour régler la broche de réglage (7) dans le sens d'un rattrapage dans une course de desserrage.
